(19) Europäisches Patentamt

European Patent Office

Office européen des brevets

(11) **EP 1 366 458 B1**

(12) **EUROPÄISCHE PATENTSCHRIFT**

(45) Veröffentlichungstag und Bekanntmachung des Hinweises auf die Patenterteilung:
**28.07.2004 Patentblatt 2004/31**

(21) Anmeldenummer: 02714061.5

(22) Anmeldetag: **22.02.2002**

(51) Int Cl.⁷: **G06K 9/00**

(86) Internationale Anmeldenummer:
**PCT/DE2002/000669**

(87) Internationale Veröffentlichungsnummer:
**WO 2002/069244 (06.09.2002 Gazette 2002/36)**

(54) **LESEVORRICHTUNG FÜR FINGERABDRÜCKE**

APPARATUS FOR READING FINGERPRINTS

DISPOSITIF DE LECTURE D'EMPREINTES DIGITALES

(84) Benannte Vertragsstaaten:
**AT DE FR GB IT**

(30) Priorität: **28.02.2001 DE 10109560**

(43) Veröffentlichungstag der Anmeldung:
**03.12.2003 Patentblatt 2003/49**

(73) Patentinhaber: **Infineon Technologies AG
81669 München (DE)**

(72) Erfinder:
• **ENGELS, Angela
82515 Wolfratshausen (DE)**
• **MORGUET, Peter
81829 München (DE)**
• **MELZNER, Hanno
85635 Höhenkirchen (DE)**
• **WIRTZ, Brigitte
83607 Holzkirchen (DE)**

(74) Vertreter: **Epping, Hermann, Fischer
Patentanwaltsgesellschaft mbH
Ridlerstrasse 55
80339 München (DE)**

(56) Entgegenhaltungen:
EP-A- 0 813 164      WO-A-98/58342
US-A- 4 544 267      US-A- 5 195 145
US-A- 5 864 296

**Beschreibung**

Die Erfindung betrifft eine Lesevorrichtung für Fingerabdrükke mit einer ersten Sensorfläche zur Erfassung der Oberflächenstruktur eines sich mit der Sensorfläche in Kontakt befindlichen und dabei sich über die Sensorfläche bewegenden Fingers, wobei die Breite der Sensorfläche wesentlich größer ist als ihre Abmessung in Bewegungsrichtung des Fingers, und einem Speicher zur Aufnahme von während der Fingerbewegung von der ersten Sensorfläche aufgenommenen Fingerabschnitten.

Bei der Abbildung von Fingerabdrücken wird üblicherweise der Finger auf eine Sensorfläche aufgelegt. Der mikroskopische Abstand der Hautoberfläche von der Sensoroberfläche wird kapazitiv, thermisch oder optisch ausgewertet und damit das Oberflächenprofil des Fingers bildlich erfaßt. Bei diesem Verfahren muß die Sensorfläche etwa gleich groß wie die zu erfassende Fingerfläche sein, oder jedenfalls so groß, daß der erfaßte Bereich genügend viele zur sicheren Identifikation erforderliche Merkmale enthält. Zumindest wenn der Sensor ein Halbleiterchip ist, ist diese große Fläche sehr teuer. Daher wurden Lesevorrichtungen für Fingerabdrücke entwickelt, bei denen die Sensorfläche wesentlich kleiner ist, beispielsweise streifenförmig. Da nun nicht mehr der gesamte Fingerabdruck auf einmal gescannt werden kann, muß entweder der Sensor über den Finger oder der Finger über den Sensor bewegt werden.

Eine solche Anordnung ist beispielsweise aus der EP 0 813 164 A1 bekannt. Dort werden bei der Relativbewegung des Fingers und des Sensors Teilbilder aufgenommen, die sich überlappen. Anhand der Überlappungen ist es später möglich, einen vollständigen Fingerabdruck zu rekonstruieren. Nachteilig ist bei dieser Anordnung, daß Daten redundant eingelesen und verarbeitet werden, um ausreichend große Überlappungsbereiche zur Zuordnung der Teilbilder zu erhalten. Da eine solche Lesevorrichtung für Fingerabdrücke auch bei einer schnellen Fingerbewegung funktionsfähig sein soll, ist die Abtastrate entsprechend hoch anzusetzen, was zur Folge hat, daß bei einer langsameren Fingerbewegung die überlappenden Bereiche größer als notwendig und somit umfangreiche Daten redundant sind.

Bei einem anderen Ansatz wird auf einen teuren Halbleitersensor verzichtet und statt dessen der Finger auf eine Glasplatte aufgelegt, wobei der Fingerabdruck mit einer Kamera abgelesen wird. Solche Systeme sind naturgemäß nicht sehr kompakt und deshalb in gewissen Anwendungen, beispielsweise bei Chipkarten, ungeeignet. Da ein solches System mechanische Komponenten aufweist, sind die damit verbundenen Nachteile wie Montagekosten, Justierung, Defektanfälligkeit usw. in Kauf zu nehmen.

Eine Aufgabe der Erfindung ist es, eine Lesevorrichtung für Fingerabdrücke anzugeben, die kompakt und einfach im Aufbau, dabei trotzdem kostengünstig in der Realisierung und zuverlässig bei der Erkennung von Fingerabdrücken ist.

Diese Aufgabe wird durch eine Lesevorrichtung der eingangs genannten Art gelöst, die dadurch gekennzeichnet ist, daß sie mindestens eine weitere Sensorfläche aufweist, wobei der Finger über beide Sensorflächen bewegt wird, sowie eine Auswertvorrichtung aufweist, die aus den aufgenommenen Fingerabschnitten beider Sensorflächen eine Bestimmung der Bewegungsgeschwindigkeit des Fingers durchführt.

Eine solche Vorrichtung ist aus WO58/58342 bekannt.

Bei der erfindungsgemäßen Lesevorrichtung kann die erste Sensorfläche also sehr klein ausgelegt werden, da gemäß der Erfindung keine überlappenden Teilbilder erzeugt werden müssen, sondern eine Zusammensetzung einzelner Bildzeilen dadurch möglich wird, daß mit Hilfe der zweiten Sensorfläche die Bewegungsgeschwindigkeit des Fingers ermittelt wird. Selbst bei einer nicht konstanten Bewegungsgeschwindigkeit ist es so ohne Probleme möglich, ein entzerrtes Bild zu erzeugen. Da die erforderliche Fläche der Sensoren sehr klein ist, kann ein solcher Sensor kostengünstig hergestellt werden. Außerdem wird der Flächenbedarf der Lesevorrichtung minimiert, da die Fläche der gesamten Lesevorrichtung im wesentlichen aus sonstigen Schaltungskomponenten zur Bildverarbeitung, - verschlüsselung usw. besteht, die ohnehin vorzusehen wären. Die Sensorflächen selber fallen dagegen kaum ins Gewicht.

Vorteilhafterweise ist eine Bildverarbeitungsvorrichtung zum Erstellen eines unverzerrten Abbilds des Fingerabdrucks durch Verknüpfung der in dem Speicher abgelegten Fingerabschnitte und der durch die Auswertvorrichtung ermittelten Bewegungsgeschwindigkeit des Fingers in die Lesevorrichtung integriert. Es ist aber auch möglich, die Weiterverarbeitung der Daten durch eine externe Funktionseinheit vorzunehmen.

Besonders günstig ist es, wenn die beiden Sensorflächen voneinander beabstandet und im wesentlichen parallel angeordnet sind, so daß die Fingerabschnitte nacheinander über beide Sensorflächen bewegt werden. Aus der Ähnlichkeit von beiden Sensorflächen aufgenommener Fingerabschnitte kann in der Auswertvorrichtung auf die Bewegungsgeschwindigkeit geschlossen werden.

Erfindungsgemäß ist eine weitere Sensorfläche vorgesehen, die senkrecht zur ersten Sensorfläche verläuft. Dadurch kann eine seitliche Bewegung des Fingers einfacher festgestellt und zur Berechnung der Bewegungsgeschwindigkeit sowie der Zusammensetzung der Bildabschnitte verwertet werden.

US 5 864 296 im Unterschied dazu offenbart eine einzeilige Vorrichtung mit zwei senkrecht dazu angeordneten Sensoren zur Bestimmung des Fingergeschwindigkeit.

Weitere Ausgestaltungen und Vorteile der Erfindung sind in den Unteransprüchen angegeben.

Die Erfindung wird nachfolgend anhand von Ausführungsbeispielen näher erläutert. Es zeigt:

Figur 1        ein erstes Ausführungsbeispiel einer erfindungsgemäßen Lesevorrichtung,

Figur 2        die Anwendung der Lesevorrichtung von Figur 1 und die

Figuren 3        bis 6 weitere Ausführungsbeispiele erfindungsgemäßer Lesevorrichtungen.

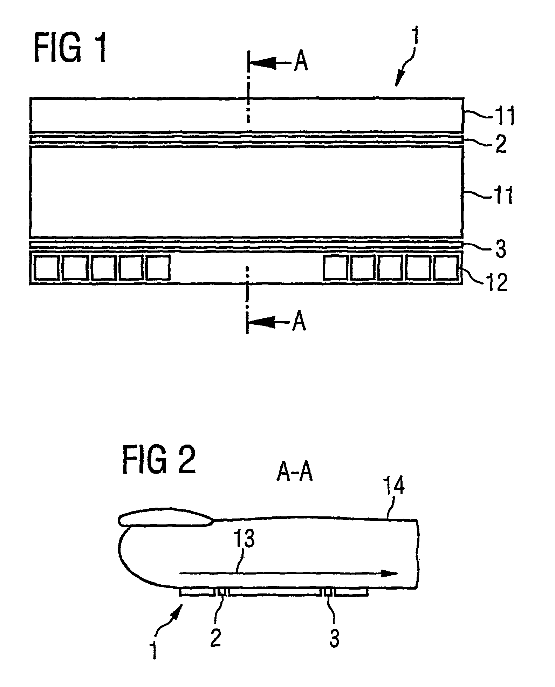

In der Figur 1 ist eine Lesevorrichtung für Fingerabdrücke dargestellt, bei der zwei Sensorflächen 2 und 3 in einem typischen Abstand von 2,5 mm parallel zueinander angeordnet sind. Die Sensorflächen sind als Zeilen ausgeführt, d.h. von jeder Sensorfläche wird nur eine Bildzeile gleichzeitig eingelesen. Es ist vorgesehen, daß der Finger im wesentlichen senkrecht zu den Sensorzeilen 2 und 3 über diese hinweg bewegt wird. Die Breite der Sensorzeilen 2 und 3 entspricht ungefähr der Breite eines Fingers. Zwischen den beiden Sensorzeilen 2 und 3 können sonstige Schaltungselemente 11 angeordnet sein. Der Lese- und Übertragungsvorgang kann entweder kontinuierlich stattfinden, unabhängig davon, ob ein Finger aufliegt oder nicht, oder in einer günstigeren Ausführung wird zwar dauernd eine der beiden Sensorzeilen gelesen, aber mit der Übertragung an eine weiterverarbeitende Einheit wird erst begonnen, wenn bei der Sensorzeile ein Kontakt mit einem Finger detektiert wird. Gleichfalls wird die Übertragung beendet, wenn kein Kontakt mit dem Finger mehr festgestellt wird. Zusätzlich sind in der Figur 1 Kontaktflächen 12 dargestellt, die zum Anschluß der Lesevorrichtung dienen.

In der Figur 2 ist ein Schnitt durch die Vorrichtung von Figur 1 dargestellt, wobei in der Darstellung von Figur 2 ein Finger 14 mit der Lesevorrichtung 1 in Kontakt ist. Der Finger 14 wird in Bewegungsrichtung 13 über die Lesevorrichtung 1 hinweg bewegt. Die Sensorzeilen 2 und 3 sind als kapazitive Halbleitersensoren ausgeführt. Deren Prinzip beruht darauf, daß in Bereichen, in denen die Haut des Fingers direkt auf dem Halbleitersensor aufliegt, von diesem eine andere Kapazität gemessen wird als bei Hautbereichen, in denen sich eine Vertiefung in der Haut, eben entsprechend dem Fingerabdruck, befindet.

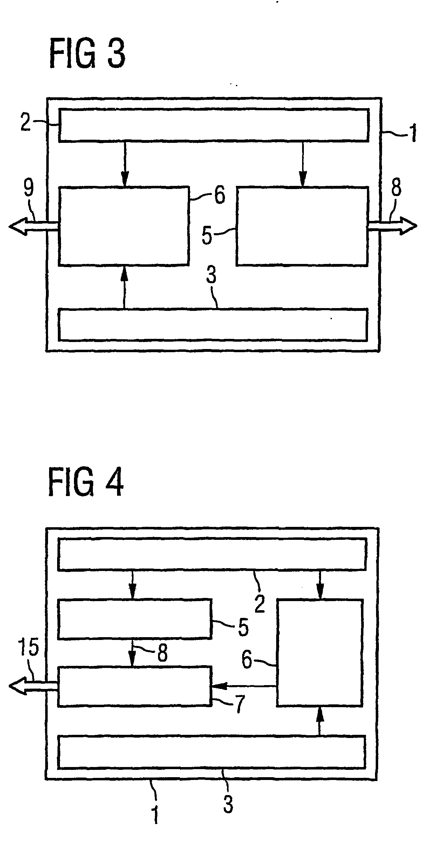

In der Figur 3 ist die detailliertere Funktionsweise der Lesevorrichtung dargestellt. Die von der ersten Sensorzeile aufgenommenen Daten werden in einem Speicher 5 abgelegt bzw. gepuffert, bevor sie als Datenstrom 8 ausgegeben werden. Weiterhin ist eine Auswertvorrichtung 6 zur Ermittlung der Bewegungsgeschwindigkeit des Fingers 14 vorgesehen. Diese Auswertvorrichtung 6 ist mit beiden Sensorzeilen 2 und 3 verbunden.

Vorteilhafterweise ist, wie in Figur 4 dargestellt, eine Bildverarbeituungsvorrichtung 7 zum Erstellen eines unverzerrten Abbildes des Fingerabdrucks vorgesehen. Durch diese werden die in dem Speicher 5 abgelegten Fingerabschnitte mit der durch die Auswertvorrichtung 6 ermittelten Bewegungsgeschwindigkeit des Fingers 14 verknüpft. Die von der Lesevorrichtung 1 ausgegebenen Daten 15 enthalten nun das unverzerrte Bild, während der Datenstrom 8 das verzerrte Bild enthält, das entsprechend der Figur 3 durch eine externe Einheit weiter zu verarbeiten ist.

Die Ermittlung der Bewegungsgeschwindigkeit erfogt durch die Auswertvorrichtung 6 beispielsweise durch die folgenden Schritte:

-    Auffinden möglichst vieler Paare ähnlicher Zeilen aus den von der oberen und unteren Sensorzeile 2 und 3 gelieferten Daten beispielsweise mittels Korrelationskoeffizienten,
-    Modellierung der Bewegungsfunktion als Funktionsansatz mit einer Anzahl unbekannter Parameter, beispielsweise als Polynom mit unbekannten Koeffizienten und
-    Bestimmung der unbekannten Parameter und damit Bestimmung der konkreten Bewegungsfunktion durch Vergleich mit den gefundenen Zeilenpaaren, beispielsweise mittels multipler linearer Regression.

Die Konstruktion des unverzerrten Bildes aufgrund der ermittelten Bewegungsfunktion aus den gelesenen Daten, zum Beispiel mittels linearer Interpolation erfolgt durch die Bildverarbeitungsvorrichtung 7. Die einzelnen Teilschritte werden im folgenden näher erläutert.

Zunächst wird angenommen, daß der Finger im wesentlichen starr ist, die Bewegung im wesentlichen senkrecht zum Verlauf der Sensorzeilen ist, und die Bewegung im wesentlichen stetig und gleichmäßig in einer Richtung ist (kein "Rucken", keine Hin- und Herbewegung, etc.). Sei ohne Beschränkung der Allgemeinheit angenommen daß der Finger von oben nach unten gezogen wird. Ein gegebenes Gebiet des Fingers wird also zunächst von der oberen Sensorzeile erfaßt, zu einem späteren Zeitpunkt von der unteren. Zum ersten Zeitpunkt möge der n-te Lesevorgang stattfinden, zum zweiten Zeitpunkt der m-te. Das heißt, daß die von der oberen Sensorzeile gelieferte Bildzeile n eine große Ähnlichkeit mit der von der unteren Sensorzeile gelieferten Bildzeile m haben wird.

Der Algorithmus versucht zunächst aus den von der oberen und unteren Sensorzeile gelieferten Datenzeilen solche ähnlichen Zeilen zu finden. Im Prinzip wird dazu eine Korrelationsmatrix zwischen den Zeilen der oberen und der unteren Sensorzeile berechnet (zu Einzelheiten s.u.). Es werden jetzt also z.B. die Zeilen n (der oberen Sensorzeile) und m (der unteren) als ähnlich identifiziert. Die Zeile i (beider Sensorzeilen) wurde zum bekannten Zeitpunkt t(i) eingelesen. Im Zeitraum t(n)..t(m) hat sich ein Gebiet des Fingers von der oberen zur unteren Sensorzeile vorgeschoben. Das heißt, insoweit der Finger starr ist, hat sich der gesamte Finger entsprechend bewegt. Der Abstand der Sensorzeilen dx ist aus der Konstruktion bekannt. Man folgert, daß der Finger im Zeitraum t(n)..t(m) um dx verschoben wurde.

Sei die Bewegung des Fingers beschrieben durch eine Funktion X(t). Die Funktion ist nach dem Gesagten stetig und monoton, z.B. bei passender Richtungsfestlegung monoton steigend. Es ist nun also:

$$X(t(m)) = X(t(n)) + dx$$

Da bekannt ist zu welchem Zeitpunkt eine bestimmte Zeile i gelesen wurde, kann man verkürzt schreiben

$$x(i) = X(t(i))$$

Man drückt den Ort des Fingers also nicht als Funktion der Zeit t, sondern als Funktion der Nummer der Zeile i aus. Somit wird

$$x(m) = x(n) + dx. \qquad (*)$$

Im allgemeinen wird nun nicht nur ein Paar ähnlicher Zeilen (n und m), sondern eine Vielzahl solcher Paare gefunden. Im Idealfall findet man zu jeder Zeile von der oberen Sensorzeile eine passende der unteren, in der Praxis einen beträchtlichen Anteil davon. Durch Bildstörungen, Schmutz, Verformung des Fingers etc. kann es vorkommen daß zu einige Zeilen keine ausreichend ähnlichen gefunden werden; ferner kann es vorkommen daß vereinzelt Zeilen irrtümlich als ähnlich erkannt werden. Jedenfalls gibt es nicht eine einzige Gleichung (*), sondern eine Vielzahl solcher Gleichungen für verschiedene Paare n, m.

Die Funktion x(i) wird mittels geeigneter Algorithmen so bestimmt, daß alle Gleichungen (*) möglichst gut erfüllt sind. Wiederum wird in der Praxis nicht jede Gleichung exakt zu erfüllen sein, d.h. es wird ein "Curve Fitting" Algorithmus angewandt um eine bestmögliche Funktion x(i) aus einer vorgegebenen Funktionsklasse zu ermitteln. Im allgemeinen werden sich im Verlauf dieser Rechnung Paare identifizieren lassen, bei denen die Gleichung (*) außergewöhnlich schlecht erfüllt ist. Dies sind höchstwahrscheinlich "irrtümlich ähnliche" Zeilenpaare, s.o. Es ist sinnvoll, diese nach einem ersten "gröberen" Durchlauf auszuschließen und sodann x(i) nochmals - und dann genauer - zu berechnen.

Beispielsweise könnte man x(i) als Polynom annähern:

$$x(i) = aO + a1*i + a2*i^2 + a3*i^3 + ...$$

Dann nimmt die Gleichung (*) die Form an

$$aO + a1*m + a2*m^2 + ... = aO + a1*n + a2*n^2 + ... + dx$$

oder

$$dx = a1*(m-n) + a2*(m^2-n^2) + ...$$

Dieses System löst man leicht mittels einer Multiplen Linearen Regression, mit den unabhängigen Vektoren (m-n), $(m^2 - n^2)$, ...und dem abhängigen (konstanten) Vektor dx. Lösung sind die Koeffizienten a1 , a2, ... Damit ist x (i) bis auf eine unerhebliche Konstante aO bestimmt. Zum Beispiel setzt man willkürlich aO = x(O) zu O für die von der oberen Sensorzeile aufgenommenen Datenzeilen; für die Datenzeilen der unteren Sensorzeile muß dann aO = -dx gesetzt werden. Bewegt man den Finger z.B. von oben nach unten, so kann man dies mathematisch auch darstellen durch eine Bewegung des Sensors relativ zum Finger von unten nach oben, also von der Fingerwurzel zur Fingerspitze. x(i) ist dann der Abstand der oberen Sensorzeile zum Zeitpunkt der Aufnahme der Datenzeile i von derjenigen Stelle des Fingers, der zum Zeitpunkt der Aufnahme der Datenzeile O gerade die obere Sensorzeile berührt hat, gemessen in Richtung von der Fingerwurzel zur Fingerspitze.

In dieser Metrik liegt die untere Sensorzeile bei einem um dx kleineren x-Wert als die obere, nämlich um dx näher bei der Fingerwurzel. Also z.B. zum Zeitpunkt der Aufnahme der Datenzeile O liegt die obere Sensorzeile definitionsgemäß bei O und damit die untere Sensorzeile bei x = -dx.

Meist wird gefordert, daß das ausgegebene Bild aus äquidistanten Zeilen besteht. Die x(i) sind natürlich für i = 0, 1, 2, ...i.a. nicht äquidistant. Um eine Bildzeile an einem gegebenen Punkt x zu ermitteln, wird man das Zeilenpaar i, i+1 so suchen, daß x(i) < x < x(i+1) gilt. Die benötigte Bildzeile bei x erhält man dann aus den Zeilen i und i+1, z.B. durch lineare Interpolation. Es können vollständige Bilder entweder aus den Daten der oberen, der unteren, oder auch beider Sensorzeilen kombiniert berechnet werden.

Beim Aufsuchen ähnlicher Zeilen aus den Daten der oberen und unteren Sensorzeilen wurde oben vorgeschlagen die Korrelationsmatrix zu berechnen. Tatsächlich ist es nicht erforderlich, die gesamte Matrix zu berechnen. Bei einer gewissen maximalen Geschwindigkeit des Fingers können die gesuchten ähnlichen Zeilen nur einen gewissen maximalen Anstand (m-n) haben. Ferner muß der Abstand bei monotoner Bewegung des Fingers jedenfalls positiv sein. Es reicht also aus, zum Aufsuchen einer ähnlichen Zeile nur ein entsprechend vorgegebenes Intervall zu durchsuchen. Wurden bereits einige passende Paare gefunden, so kann man ferner ausnutzen, daß die Geschwindigkeit des Fingers sich nicht abrupt ändert. Es ist also anzunehmen, daß der Abstand ähnlicher Zeilen sich nicht schnell ändert. Beginnt man also die Suche nach ähnlichen Zeilen bei einem aus bereits gefundenen Paaren gewonnenen Schätzwert, so wird man zu einer neuen Zeile im allgemeinen bereits sehr schnell wiederum eine passende ähnliche finden.

Es wurde oben angenommen, daß die Bewegung des Fingers orthogonal zur Richtung der Sensorzeilen verläuft. Dies kann z.B. durch eine rinnenförmige Fingerführung unterstützt werden.

Trotzdem werden in Praxis auch kleine Bewegungen orthogonal zur Hauptbewegungsrichtung vorkommen. Diese sind offenbar unschädlich, solange sie während der Bewegung eines Fingerelements von der oberen zur unteren Sensorzeile klein sind gegen die typische Breite der Fingerlinien, denn dann werden sicher ausreichend ähnliche Zeilen aufgefunden. Ist dies nicht erfüllt, so kann man die Suche nach ähnlichen Zeilen ausdehnen auf Zeilen, die wenigstens nach einer gewissen seitlichen Verschiebung ähnlich sind. D.h. man verschiebt die zu durchsuchenden Zeilen probeweise seitlich und untersucht ob eine der verschobenen Zeilen ähnlich einer vorgegebenen Zeile ist. Wie oben kann man ausnutzen daß sich auch die seitliche Verschiebung nicht abrupt ändert, d.h. der Start der Suche und der Suchbereich können ausgehend von bereits gefundenen Paaren sinnvoll gewählt werden und die typische Suchzeit damit verringert werden.

Selbstverständlich ist das beschriebene Verfahren lediglich beispielhaft zu verstehen, da auch andere Möglichkeiten denkbar sind. Auch die erfindungsgemäße Vorrichtung läßt eine Vielzahl von Variationen zu. So können zur Sicherheit gegen Störungen nicht nur zwei, sondern mehrere Sensorzeilen vorgesehen werden, die entweder nebeneinander oder in gewissen Abständen angeordnet sind. Weiterhin muß nicht vorausgesetzt werden, daß die Bewegung des Fingers 14 in nur einer Richtung erfolgt, sondern auch Bewegungen erst abwärts und dann zurück aufwärts sind erlaubt. Zur Erhöhung der Sicherheit kann dies mehrmals durchgeführt werden. Die Bewegung des Fingers 14 muß auch nicht in Richtung der Längserstreckung des Fingers 14 erfolgen, sondern kann ebenso quer dazu geschehen. Insbesondere für die Rekonstruktion des unverzerrten Bildes sind viele andere Algorithmen verwendbar, wobei die oben angegebenen Algorithmen besonders vorteilhaft erscheinen.

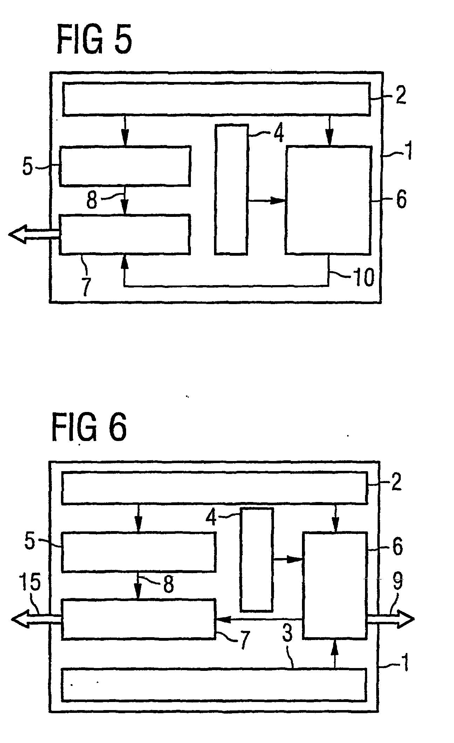

Wie in Figur 5 gezeigt, können auch Sensorzeilen 4 parallel zur Bewegungsrichtung 13, also senkrecht zur ersten Sensorzeile 2, vorgesehen werden. Durch Auswertung der Daten aus der Sensorzeile 4 werden weitere Informationen zur Bewegung des Fingers gewonnen, um das oben geschilderte Verfahren zur Berechnung der Fingerbewegung zu ergänzen oder unter Umständen zu ersetzen. Insbesondere seitliche Bewegungen des Fingers sind so gut erkennbar.

Die Bewegungsfunktion des Fingers oder deren Parameter können darüber hinaus als Personenmerkmal abgespeichert werden (siehe Figur 6). In dieser Darstellung wird das unverzerrte Bild als Datenstrom 15 ausgegeben, während die Bewegungsfunktion des Fingers 14, die von der Auswertvorrichtung 6 ermittelt wurde, einerseits als Daten 9 bereitgestellt und andererseits zur Erstellung des unverzerrten Bildes weiterverarbeitet wird. Zur Erhöhung der Erkennungs- und Fälschungssicherheit wird die Bewegungsfunktion zusätzlich zur Identifikation der Person herangezogen. Insbesondere können so Fälschungsversuche abgewehrt werden, wenn die Bewegungscharakteristik nicht der bisher bekannten der entsprechenden Person entspricht. In diesem Fall ist zum Beispiel zu vermuten, daß ein Stempel oder ähnliches mit dem entsprechenden Muster verwendet wurde, der nicht in der selben Weise wie der echte Finger bewegt wurde. In Erweiterung dieser Methode kann auch in Betracht gezogen werden, lediglich die Daten von einer einzigen Sensorzeile zu verwenden, ohne zusätzlich die Bewegungscharakteristik zu berücksichtigen. Diese ist dann implizit in den Daten vorhanden. Wird eine Fälschung des selben Fingerabdrucks verwendet, aber mit einer nicht dem Original entsprechenden Bewegungscharakteristik, so entsprechen die eingelesenen Daten nicht dem Original und der Fälschungsversuch kann abgewehrt werden.

Günstigerweise wird man wohl den Sensor konstruktiv mit mindestens zwei Sensorzeilen ausrüsten, denn dann ist es dem Anwender bzw. einem den Fingersensor enthaltenden Gerät immer noch möglich, eines der beschriebenen Verfahren zu verwirklichen.

Weiterhin bietet die erfindungsgemäße Vorrichtung den Vorteil, daß im Verlauf der Berechnung anfallende Größen zur Detektion von Fälschungsversuchen herangezogen werden können, beispielsweise die Güte der Lösung der Gleichungssysteme. Da der echte Finger immer eine gewisse Verformbarkeit besitzt, die größer ist als beispielsweise die eines Stempels, aber kleiner als die beispielsweise einer dünnen Folie, kann sowohl bei einer zu guten wie auch einer zu schlechten Fingerfälschung das System den Fälschungsversuch erkennen.

Bezugszeichenliste

1 Lesevorrichtung
2 Sensorfläche
3 Sensorfläche
4 Sensorfläche
5 Speicher
6 Auswertvorrichtung
7 Bildverarbeitungsvorrichtung
8 Datenstrom
9 Datenstrom
11 Sonstige Schaltungskomponenten
12 Kontaktflächen
13 Bewegungsrichtung
14 Finger
15 Datenstrom

**Patentansprüche**

1. Lesevorrichtung für Fingerabdrücke mit

- einer ersten Sensorfläche (2) zur Erfassung der Oberflächenstruktur eines sich mit der Sensorfläche (2) in Kontakt befindlichen und dabei sich über die Sensorfläche (2) bewegenden Fingers (14), wobei die Breite der Sensorfläche (2) wesentlich größer ist als ihre Abmessung in Bewegungsrichtung (13) des Fingers (14),
- einem Speicher (5) zur Aufnahme von während der Fingerbewegung von der Sensorfläche (2) aufgenommenen Fingerabschnitten,
- mindestens einer weiteren Sensorfläche (3), wobei der Finger (14) über beide Sensorflächen (2, 3) bewegt wird und
- einer Auswertvorrichtung (6), die aus den aufgenommenen Fingerabschnitten beider Sensorflächen (2, 3) eine Bestimmung der Bewegungsgeschwindigkeit des Fingers (14) durchführt

**gekennzeichnet durch**
eine weitere Sensorfläche (4), die senkrecht zur ersten Sensorfläche (2) angeordnet ist zur Detektion einer seitlichen Fingerbewegung.

2. Lesevorrichtung nach Anspruch 1,
**dadurch gekennzeichnet, daß**
eine Bildverarbeitungsvorrichtung (7) zum Erstellen eines unverzerrten Abbildes des Fingerabdrucks durch Verknüpfung der in dem Speicher (5) abgelegten Fingerabschnitte mit der durch die Auswertvorrichtung (6) ermittelten Bewegungsgeschwindigkeit des Fingers (14) vorgesehen ist.

3. Lesevorrichtung nach Anspruch 1,
**dadurch gekennzeichnet, daß**
die weitere entsprechend der ersten Sensorfläche (2) gestaltete Sensorfläche (3) von dieser beabstandet und im wesentlichen parallel zu der ersten Sensorfläche (2) angeordnet ist, so daß Fingerabschnitte nacheinander über beide Sensorflächen (2, 3) bewegt werden.

4. Lesevorrichtung nach Anspruch 1,
**dadurch gekennzeichnet, daß**
die Sensorflächen (2, 3) jeweils eine Bildzeile aufnehmen.

**5.** Lesevorrichtung nach Anspruch 1,
**dadurch gekennzeichnet, daß**
zwischen den beabstandeten Sensorflächen (2, 3) weitere Bauelemente (11) der Lesevorrichtung angeordnet sind.

**6.** Lesevorrichtung nach Anspruch 1,
**dadurch gekennzeichnet, daß**
von den mindestens zwei Sensorflächen (2, 3) aufgenommene ähnliche Paare von Fingerabschnitten ermittelt werden und deren zeitlicher Abstand von der Auswertvorrichtung (6) zur Ermittlung der Bewegungsfunktion ausgewertet wird.

**7.** Lesevorrichtung nach Anspruch 1,
**dadurch gekennzeichnet, daß**
die Erstellung des unverzerrten Bildes nur aus den Daten einer der Sensorflächen (2, 3) erfolgt.

**8.** Verfahren zum Lesen eines Fingerabdrucks eines über eine Sensorfläche (2) bewegten Fingers (14), wobei die Breite der ersten Sensorfläche (2) wesentlich größer ist als ihre Abmessung in Bewegungsrichtung des Finger (14), wobei

- durch die Sensorfläche (2) aufgenommene Daten gespeichert werden,
- eine zweite Sensorfläche (3) bereitgestellt wird und die Bewegungsfunktion des Fingers (14) durch Vergleich von durch die beiden Sensorflächen aufgenommenen Fingerabschnitten und Auswertung des zeitlichen Abstandes ähnlicher Fingerabschnitte ermittelt wird und
- ein unverzerrtes Abbild des Fingers (14) durch Verknüpfung der aufgenommenen Fingerabschnitte mit der Bewegungsfunktion des Fingers erstellt wird,

**dadurch gekennzeichnet, daß**
eine weitere Sensorfläche (4), die senkrecht zur ersten Sensorfläche (2) angeordnet ist, zur Detektion einer seitlichen Fingerbewegung bereitgestellt wird und eine detektierte seitliche Fingerbewegung bei der Erstellung des unverzerrten Abbildes berücksichtigt wird.

**Claims**

**1.** Fingerprint reader having

- a first sensor area (2) for registering the surface structure of a finger (14) in contact with the sensor area (2) and moving over the sensor area (2) at the same time, the width of the sensor area (2) being significantly greater than its dimension in the direction of movement (13) of the finger (14),
- a memory (5) for recording sections of the finger recorded by the sensor area (2) during the finger movement,
- at least one further sensor area (3), the finger (14) being moved over both sensor areas (2, 3), and
- an evaluation device (6), which carries out a determination of the speed of movement of the finger (14) from the recorded finger sections from both sensor areas (2, 3),

**characterized by**
a further sensor area (4), which is arranged at right angles to the first sensor area (2) in order to detect a lateral finger movement.

**2.** Reader according to Claim 1, **characterized in that** an image processing device (7) is provided to create an undistorted image of the fingerprint by linking the finger sections stored in the memory (5) with the speed of movement of the finger (14) determined by the evaluation device (6).

**3.** Reader according to Claim 1, **characterized in that** the further sensor area (3), configured in the same way as the first sensor area (2), is spaced apart from the latter and arranged substantially parallel to the first sensor area (2), so that finger sections are moved successively over both sensor areas (2, 3).

**4.** Reader according to Claim 1, **characterized in that** the sensor areas (2, 3) in each case record one image line.

**5.** Reader according to Claim 1, **characterized in that** further components (11) of the reader are arranged between the spaced-apart sensor areas (2, 3).

6. Reader according to Claim 1, **characterized in that** similar pairs of finger sections recorded by the at least two sensor areas (2, 3) are determined and their difference in time is evaluated by the evaluation device (6) in order to determine the movement function.

7. Reader according to Claim 1, **characterized in that** the undistorted image is created only from the data from one of the sensor areas (2, 3).

8. Method of reading a fingerprint of a finger (14) moved over a sensor area (2), the width of the first sensor area (2) being significantly greater than its dimension in the direction of movement of the finger (14), in which method

- data recorded by the sensor area (2) are stored,

**characterized in that**
a second sensor area (3) is provided, and the movement function of the finger (14) is determined by comparing the finger sections recorded by the two sensor areas and evaluating the distance in time between similar finger sections, and

- an undistorted image of the finger (14) is created by linking the recorded finger sections with the movement function of the finger.

**Revendications**

1. Dispositif de lecture d'empreintes digitales, comprenant

- une première surface (2) de capteur, de détection de la structure superficielle d'un doigt (14) se trouvant en contact avec la surface (2) de capteur et se déplaçant sur la surface (2) de capteur, la largeur de la surface (2) de capteur étant sensiblement plus grande que sa dimension dans la direction (13) de déplacement du doigt (14) ;
- une mémoire (5) d'enregistrement de parties de doigt enregistrées par la surface (2) de capteur pendant le déplacement du doigt ;
- au moins une autre surface (3) de capteur, le doigt (14) étant déplacé sur les deux surfaces (2, 3) de capteur ; et
- un dispositif d'exploitation qui, à partir des parties de doigt enregistrées des deux surfaces (2, 3) de capteur, effectue une détermination de la vitesse de déplacement du doigt (14),

**caractérisé par**
une autre surface (4) de capteur, qui est perpendiculaire à la première surface (2) de capteur et qui est destinée à la détection d'un mouvement latéral du doigt.

2. Dispositif de lecture suivant la revendication 1, **caractérisé en ce qu'**il est prévu un dispositif (7) de traitement de l'image pour établir une reproduction non déformée de l'empreinte digitale par combinaison de parties de doigt mémorisées dans la mémoire (5) à la vitesse de déplacement du doigt (14) déterminée par le dispositif (6) d'exploitation.

3. Dispositif de lecture suivant la revendication 1, **caractérisé en ce que** l'autre surface (3) de capteur conformée de manière correspondante à la première surface (2) de capteur est disposée à distance de celle-ci et en étant sensiblement parallèle à la première surface (2) de capteur, de sorte que des parties de doigt sont déplacées les unes après les autres sur les deux surfaces (2, 3) de capteur.

4. Dispositif de lecture suivant la revendication 1, **caractérisé en ce que** les surfaces (2, 3) de capteur enregistrent, respectivement, une ligne d'images.

5. Dispositif de lecture suivant la revendication 1, **caractérisé en ce que** d'autres composants (11) du dispositif de lecture sont disposés entre les surfaces (2, 3) de capteur à distance l'une de l'autre.

6. Dispositif de lecture suivant la revendication 1, **caractérisé en ce que** des paires analogues de parties de doigt enregistrées par les au moins deux surfaces (2, 3) de capteur sont déterminées et leur distance dans le temps est exploitée par le dispositif (6) d'exploitation pour la détermination de la fonction de déplacement.

7. Dispositif de lecture suivant la revendication 1, **caractérisé en ce que** l'établissement de l'image non déformée s'effectue seulement à partir des données de l'une des surfaces (2, 3) de capteur.

8. Procédé de lecture d'une empreinte digitale d'un doigt (14) se déplaçant sur une surface (2) de capteur, la largeur de la première surface (2) de capteur étant sensiblement plus grande que sa dimension dans la direction du déplacement du doigt (14), dans lequel

- on mémorise des données enregistrées par la surface (2) de capteur ;
- on se procure une deuxième surface (3) de capteur et on détermine la fonction de déplacement du doigt (14) par comparaison de parties de doigt enregistrées par les deux surfaces de capteur et par exploitation de la distance dans le temps de parties de doigt analogues ; et
- on établit une reproduction non déformée du doigt (14) par combinaison des parties de doigt enregistrées à la fonction de déplacement du doigt,

   **caractérisé en ce que**
   on se procure une autre surface (4) de capteur, qui est perpendiculaire à la première surface (2) de capteur, pour la détection d'un déplacement latéral du doigt et on tient compte d'un déplacement latéral du doigt, qui a été détecté, pour l'établissement de la reproduction non déformée.

FIG 1

◄─ A

1

11

2

11

3

12

◄─ A

FIG 2

A-A

14

13

1          2          3

## FIG 3

## FIG 4

## FIG 5

## FIG 6